(19) Europäisches Patentamt
European Patent Office
Office européen des brevets

(11) Veröffentlichungsnummer: **0 597 912 B1**

(12) **EUROPÄISCHE PATENTSCHRIFT**

(45) Veröffentlichungstag der Patentschrift: **17.05.95**

(51) Int. Cl.6: **C04B 18/16**, C04B 11/26, B01J 2/10, B01F 7/04

(21) Anmeldenummer: **92916054.7**

(22) Anmeldetag: **21.07.92**

(86) Internationale Anmeldenummer: **PCT/EP92/01659**

(87) Internationale Veröffentlichungsnummer: **WO 93/02984 (18.02.93 93/05)**

(54) **VERWENDUNG EINER MISCH-, GRANULIER- UND TROCKNUNGSVORRICHTUNG.**

(30) Priorität: **27.07.91 DE 4124984**

(43) Veröffentlichungstag der Anmeldung:
**25.05.94 Patentblatt 94/21**

(45) Bekanntmachung des Hinweises auf die Patenterteilung:
**17.05.95 Patentblatt 95/20**

(84) Benannte Vertragsstaaten:
**AT BE CH DE DK ES FR GB GR IT LI LU NL SE**

(56) Entgegenhaltungen:
**EP-A- 0 073 864**
**EP-A- 0 163 963**
**CH-A- 367 379**
**FR-A- 2 396 941**

(73) Patentinhaber: **BABCOCK-BSH AKTIENGE-SELLSCHAFT**
**Postfach 6**
**D-47811 Krefeld (DE)**

Patentinhaber: **Gebr. Lödige Maschinenbau Gesellschaft mbH**
**Elsener Strasse 7-9,**
**Postfach 20 50**
**D-33050 Paderborn (DE)**

(72) Erfinder: **HIRZ, Harri**
**Am Berg 8**
**D-6431 Hauneck-Unterhaun (DE)**
Erfinder: **STERR, Horst**
**Von Vincke Weg 77**
**D-4790 Paderborn (DE)**

(74) Vertreter: **Planker, Karl Josef, Dipl.-Phys. et al**
**Babcock-BSH AG**
**vormals Büttner-Schilde-Haas AG,**
**Postfach 6**
**D-47811 Krefeld (DE)**

## Beschreibung

Die Erfindung betrifft eine neue Verwendung einer Misch-, Granulier- und Trocknungsvorrichtung, bestehend im wesentlichen aus einem liegenden zylindrischen Behälter mit Einfüllschacht und Auslauföffnung, einer darin gelagerten antreibbaren Welle, pflugscharähnlichen Mischwerkzeugen, die mit radialen Armen an der Welle befestigt sind und bis nah an die Behälterwand reichen, und an der Behälterwand angebrachten, um radiale Achsen drehbaren und antreibbaren Messerköpfen, die der von den Mischwerkzeugen bestrichenen Hüllfläche angepaßt sind.

Eine ausführliche Beschreibung der Vorrichtung findet sich in der DE-PS 27 30 941. Die Vorrichtung ist zum Behandeln von pulverförmigem, faserigem, pastösem oder breiigem Gut und zum Trocknen der erhaltenen Granulate bestimmt. Für die Messerköpfe sind darin zwei verschiedene Ausführungen angegeben. Bei der ersten Ausführung sind mehrere geradlinig verlaufende Messer unterschiedlicher Länge in mehreren Ebenen übereinander auf einer Welle befestigt. Bei der anderen Ausführung sind die Messer an den Enden hochgebogen. Durch das Zusammenwirken der pflugscharartigen Mischwerkzeuge und der Messerköpfe soll bewirkt werden, daß das Material gedrückt wird, um Granulate zu bilden, die durch mechanische Beeinflussung mittels nachfolgender Werkzeuge weiter verdichtet werden.

Die vorliegende Erfindung geht von einer Problematik aus, die mit dem in der erwähnten Patentschrift angegebenen Verwendungszweck der bekannten Vorrichtung keinerlei Berührungspunkte hat.

Bei der Herstellung von Gipskartonplatten fällt stets ein gewisser unverkäuflicher Ausschuß an, bestehend im wesentlichen aus schadhaften oder nicht normgerechten Platten. Der Ausschuß fällt teils unmittelbar nach dem Abbinden, teils nach der Trocknung der abgebundenen Platten an. In dem ersten Fall enthält er 30 bis 40 % Feuchte, in dem zweiten Fall ist das Ausschußmaterial praktisch absolut trocken. Die Menge des Ausschußmaterials ist in den einzelnen Herstellungsbetrieben unterschiedlich; sie liegt in der Regel zwischen 2 und 8 % der Produktionsmenge und erreicht in Extremfällen sogar 10 %.

Aus der Praxis ist es bekannt, den Ausschuß als Sekundärrohstoff wieder in den Produktionsprozeß zurückzuführen. Hierzu hat man zunächst die Platten grob vorzerkleinert. Das vorzerkleinerte Material ist eine Mischung aus Gipsbrocken und bis zu handtellergroßen Pappefetzen, an denen Gipsreste fest anhaften. Bei den am meisten verbreiteten Gipskartonplatten mit einem Flächengewicht von etwa 8 kg/m$^2$ liegt der Papieranteil bei 4,5 bis 5 %, bei Platten mit einem Flächengewicht von etwa 11 kg/m$^2$ bei 3,4 bis 3,8 %. Eine den Ansprüchen der Praxis genügende Trennung von Papier und Gips - etwa durch Sichtung - hat sich bisher produktionstechnisch nicht durchgesetzt.

Das grob vorzerkleinerte Gut ist in üblichen Kalzinatoren nicht verarbeitbar. Die Pappefetzen würden z.B. in einem indirekt beheizten Drehrohrkalzinator auf dem Gipskörnerbett aufschwimmen und Knäuel bilden, die nicht zuverlässig ausgetragen werden und daher den Kalzinator verstopfen können. Es besteht auch die Gefahr, daß beim Entleeren des Kalzinators trockenes Papier im Kalzinator zurückbleibt und beim Wiederanfahren eine Explosion auslöst.

Man hat auch schon das grob vorzerkleinerte Material zusammen mit frischem Naturgips einer Mühle zugeführt. Die bis zu etwa 30 mm großen Naturgipsbrocken bewirken in günstigen Fällen eine gewisse, aber nicht immer ausreichende weitere Zerkleinerung der Pappefetzen. Wenn feinkörniger Rauchgasgips oder Chemiegips als Rohstoff eingesetzt wird, ist eine zufriedenstellende weitere Zerkleinerung nicht möglich. Das Verfahren hat sich daher in der Praxis nicht durchsetzen können.

Gemäß der Erfindung wird die eingangs angegebene bekannte Vorrichtung zum Aufbereiten des bei der Gipskartonplattenherstellung anfallenden grob vorzerkleinerten Ausschußmaterials verwendet.

Dabei fällt ein fein zerkleinertes, homogenes, von Agglomeraten völlig freies Zwischenprodukt an, welches gemeinsam mit feinteiligem Rohgips in einem Kalzinator weiterbehandelt werden kann, ohne daß die Papierbestandteile vom Gips separiert werden.

Bei Versuchen mit repräsentativen Materialproben zeigte sich, daß schon nach einer mittleren Verweilzeit von 3 Minuten die Papierbestandteile weitgehend zerfasert und so homogen mit dem Gips vermischt sind, daß der Einsatz im Kalzinator problemlos möglich ist. Nach einer mittleren Verweilzeit von 6 Minuten wurden nach der Methode der Luftstromsichtung Kornspektren erhalten, bei denen bei einer Probe 90 % des Materials eine Korngröße von weniger als 1 mm aufwiesen. Korngrößen über 5 mm kamen hierbei nicht vor.

Bei einem Ausführungsbeispiel wird die mittlere Verweilzeit in der erfindungsgemäß zu verwendenden Vorrichtung sehr kurz gehalten und anschließend in einem weiteren Mischer eine zusätzliche Homogenisierung durchgeführt. Die Feinzerkleinerung und die Vermischung der einzelnen Komponenten erfolgt dabei in zwei getrennten Systemen.

Vorzugsweise wird der Feuchtegehalt des Einsatzmaterials auf maximal 10 % begrenzt. Das kann z.B. durch Mischung von trockenem und nassem Ausschußmaterial oder durch Beimischen von trockenem Rohgips geschehen.

Ferner ist es auch möglich, das grob vorzerkleinerte Material vorzutrocknen.

Vorzugsweise ist die Möglichkeit vorgesehen, das Material während der Behandlung indirekt oder direkt zu trocknen.

Bei zu trockenem Ausgangsmaterial kann es von Vorteil sein, zusätzlich Wasser einzudüsen.

In bevorzugter Ausgestaltung der Erfindung wird das aufbereitete Material in einer Menge von höchstens etwa 20 % dem Rohgips vor der Kalzinierung beigemischt. Höhere Beimischungen können wegen der in dem aufbereiteten Material möglicherweise enthaltenen Zusatzstoffe, wie Abbindebeschleuniger oder -verzögerer, Klebstoffe und Papierinhaltsstoffe, zu Störungen des Abbindeverhaltens führen. Je nach den Gegebenheiten des Einzelfalles sollte ein Mischungsverhältnis von 10 Teilen aufbereitetes Material zu 90 Teilen Rohgips nicht überschritten werden. Bei einem Anteil von 10 % aufbereitetes Material enthält die Gesamtmischung, die der Kalzinierung zugeführt wird, einen Papieranteil von etwa 0,4 bis 0,5 %. Dieser Anteil hat keinerlei negativen Einfluß auf die Kalzinierung, die nachgeschalteten Verfahrensstufen und die Qualität der Endprodukte.

Bei einer weiteren vorteilhaften Ausgestaltung der Erfindung erfolgt die grobe Vorzerkleinerung der Ausschußplatten im Bereich des Einfüllschachtes, der zu diesem Zweck z.B. trichterförmig ausgebildet und mit Stachelwalzen ausgestattet ist.

Für die erfindungsgemäße Verwendung kann die Vorrichtung kontinuierlich, quasi-kontinuierlich oder auch diskontinuierlich betrieben werden.

Die Zeichnung zeigt stark vereinfacht eine bevorzugte Ausführungsform der gemäß der Erfindung zu verwendenden Vorrichtung.

Figur 1 zeigt schematisch einen Längsschnitt.

Figur 2 zeigt in der linken Hälfte einen Querschnitt, in der rechten Hälfte eine Ansicht, gesehen von der Ausfallseite.

Figur 3 veranschaulicht die Anpassung des Messerkopfes an das Mischwerkzeug.

Figur 4 zeigt eine Draufsicht eines Messerkopfes aus der Richtung gemäß Pfeil A der Figur 2.

Ein liegender zylindrischer Behälter 1 hat einen Einfüllschacht 2 und eine Auslauföffnung 3 mit einem höhenverstellbaren Schieber 4. Die Behälterwand kann auf der ganzen Länge oder auch auf einem Teil der Länge als Doppelmantel zum Zuführen eines Heizmediums ausgebildet sein. Die Vorrichtung kann auch in der Zeichnung nicht dargestellte Anschlüsse für Zuluft und Abluft sowie Düsen zum Einsprühen von Wasser aufweisen.

Axial ist in dem Behälter 1 eine Welle 5 gelagert, die durch einen Motor 6 antreibbar ist. Auf der Welle 5 sitzen in gleichmäßigen Abständen winkelversetzt mehrere radiale Arme 7, an denen pflugscharähnliche Mischwerkzeuge 8 befestigt sind, die bis nah an die Behälterwand reichen.

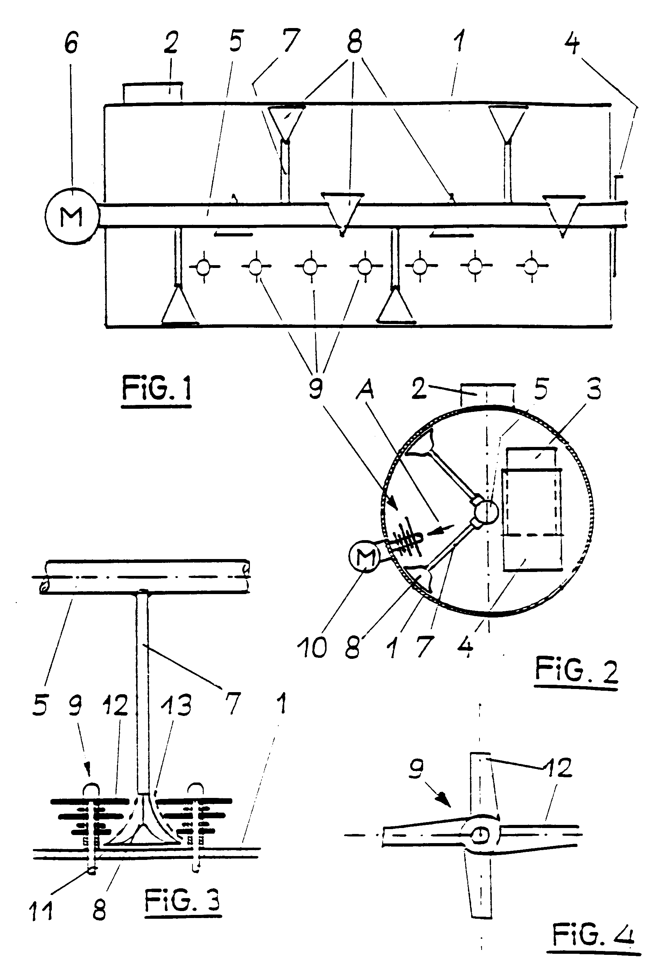

Zwischen je zwei Mischwerkzeugen 8 sind an der Behälterwand mehrere Messerköpfe 9 angebracht, die um radiale Achsen drehbar und durch einen Antrieb 10 antreibbar sind. Die Messerköpfe 9 sind - wie in Figur 1 angedeutet - in mindestens einer achsenparallelen Reihe angeordnet, vorzugsweise in zwei Reihen, und zwar in der unteren Hälfte des Behälters 1.

Die erwähnte pflugscharähnliche Form der Mischwerkzeuge 8 ist in Figur 1 und Figur 2 nur angedeutet, jedoch aus Figur 3 deutlich zu erkennen.

Jeder Messerkopf 9 besteht aus einer Antriebswelle 11 und mehreren flachen Messern 12, die - abwechselnd rechtwinklig versetzt übereinanderliegend - mittig auf der Antriebswelle 11 befestigt sind. Die Länge der Messer 12 nimmt mit der Entfernung von der Behälterinnenwand zu, so daß die Spitzen der Messer 12 auf einer Kurve 13 liegen, die der Seitenflanke der Mischwerkzeuge 8 und somit der von diesen Werkzeugen bestrichenen Hüllfläche angepaßt ist.

Die Drehzahl der Welle 5 wird im Betrieb so gewählt, daß das zu bearbeitende Material im mechanisch erzeugten Wirbelbett sowohl feinzerkleinert als auch vermischt wird. In der Regel geschieht das in einem Froude-Zahl-Bereich zwischen 1 und 7. Dabei ist die Froude-Zahl $Fr = (n/n_c)^2$, wobei n die Drehzahl der Welle 5 und $n_c$ die kritische Drehzahl ist. Die Messerköpfe 9 rotieren mit einer Drehzahl zwischen 1000 und 5000 Umdrehungen pro Minute, z.B. 1500 oder 3000 Umdrehungen pro Minute. Die erforderliche mittlere Verweilzeit wird durch die Einstellung des Schiebers 4 vorgegeben.

Bei der in der Zeichnung dargestellten Vorrichtung handelt es sich um eine kontinuierlich betriebene Maschine mit Werkzeugen, die das im Behälter befindliche Material in kurzer Zeit fein zerkleinern und homogen vermischen.

## Patentansprüche

1.      Verwendung einer Misch-, Granulier- und Trocknungsvorrichtung, bestehend im wesentlichen aus

einem liegenden zylindrischen Behälter (1) mit Einfüllschacht (2) und Auslauföffnung (3),

einer darin gelagerten antreibbaren Welle (5),

pflugscharähnlichen Mischwerkzeugen (8), die mit radialen Armen (7) an der Welle (5) befestigt sind und bis nah an die Behälterwand reichen, und

an der Behälterwand angebrachten, um radiale Achsen drehbaren und antreibbaren Messerköpfen (9), die der von den Mischwerkzeugen (8) bestrichenen Hüllfläche angepaßt sind, zum Aufbereiten des bei der Herstellung von Gipskartonplatten anfallenden Ausschußmaterials nach vorheriger Grobzerkleinerung.

2. Verwendung nach Anspruch 1, dadurch gekennzeichnet, daß die mittlere Verweilzeit des Ausschußmaterials in dem Behälter (1) 3 bis 12 Minuten beträgt.

3. Verwendung nach Anspruch 1, dadurch gekennzeichnet, daß die Verweilzeit 2 bis 7 Minuten beträgt und daß das aufbereitete Material anschließend in einer getrennten Stufe weiter homogenisiert wird.

4. Verwendung nach einem der Ansprüche 1 bis 3, dadurch gekennzeichnet, daß der mittlere Feuchtegehalt des Ausschufmaterials vorher auf 10 % begrenzt wird.

5. Verwendung nach Anspruch 4, dadurch gekennzeichnet, daß der Feuchtegehalt durch Mischen von trockenem und nassem Ausschußmaterial eingestellt wird.

6. Verwendung nach Anspruch 4, dadurch gekennzeichnet, daß der Feuchtegehalt durch Beimischen von trockenen Rohgips zu dem grob vorzerkleinerten Ausschußmaterial eingestellt wird.

7. Verwendung nach Anspruch 4, dadurch gekennzeichnet, daß das grob vorzerkleinerte Material vorgetrocknet wird.

8. Verwendung nach einem der Ansprüche 1 bis 7, gekennzeichnet durch einen beheizten Behältermantel.

9. Verwendung nach einem der Ansprüche 1 bis 8, dadurch gekennzeichnet, daß den Behälter (1) Trocknungsluft zugeführt wird.

10. Verwendung nach einem der Ansprüche 1 bis 6, dadurch gekennzeichnet, daß Wasser in den Behälter (1) eingesprüht wird.

11. Verwendung nach einem der Ansprüche 1 bis 10, dadurch gekennzeichnet, daß das aufbereitete Material anschließend in einem Verhältnis unter 20:80, vorzugsweise höchstens 10:90, mit Rohgips vermischt der Kalzinierung zugeführt wird.

12. Verwendung nach einem der Ansprüche 1 bis 11, dadurch gekennzeichnet, daß die Grobzerkleinerung im Bereich des Einfüllschachtes (2) erfolgt.

**Claims**

1. A use of a mixing, granulating and drying device, substantially comprising
   a horizontal cylindrical container (1) having a feed shaft (2) and a discharge opening (3),
   a drivable shaft (5) mounted therein,
   ploughshare-like mixing implements (8) which are fixed to the shaft (5) by radial arms (7) and extend almost as far as the container wall, and
   drivable cutter heads (9) which are mounted on the container wall and are rotatable about radial axes and which are adapted to the enveloping surface covered by the mixing implements (8),
   for processing the waste material produced in the manufacture of gypsum plasterboards after prior coarse grinding.

2. A use according to claim 1, characterised in that the average residence time of the waste material in the container (1) is 3 to 12 minutes.

3. A use according to claim 1, characterised in that the residence time is 2 to 7 minutes and in that the processed material is then homogenised further in a separate step.

4. A use according to any one of claims 1 to 3, characterised in that the average moisture content of the waste material is restricted in advance to 10%.

5. A use according to claim 4, characterised in that the moisture content is regulated by the mixing of dry and wet waste material.

6. A use according to claim 4, characterised in that the moisture content is regulated by adding dry crude gypsum to the coarsely preground waste material.

7. A use according to claim 4, characterised in that the coarsely preground material is predried.

8. A use according to any one of claims 1 to 7, characterised by a heated container jacket.

9. A use according to any one of claims 1 to 8, characterised in that drying air is fed to the container (1).

**10.** A use according to any one of claims 1 to 6, characterised in that water is sprayed into the container (1).

**11.** A use according to any one of claims 1 to 10, characterised in that the processed material is then mixed with crude gypsum in a ratio below 20:80, preferably at the most 10:90, and then calcined.

**12.** A use according to any one of claims 1 to 11, characterised in that the coarse grinding takes place in the region of the feed shaft (2).

**Revendications**

**1.** Utilisation d'un dispositif de mélange, de granulation et de séchage, constitué essentiellement par :

un récipient (1) cylindrique horizontal, comportant un puits de remplissage (2) et un orifice de sortie (3),

un arbre (5) qui est monté là-dedans et qui peut être entraîné,

des outils de mélange (8) en un genre de soc de charrue, qui sont fixés à des bras radiaux (7) sur l'arbre (5) et qui s'étendent jusqu'à proximité de la paroi du récipient, et

des têtes à couteau (9) qui sont montées sur la paroi du récipient, qui peuvent tourner autour d'axes radiaux, peuvent être entraînées et qui sont adaptées à la surface d'enveloppe balayée par les outils de mélange (8),

pour le traitement, après un concassage préalable, de la matière de rebut produite lors de la fabrication de panneaux en carton et plâtre.

**2.** Utilisation suivant la revendication 1, caractérisée en ce que le temps moyen de séjour de la matière de rebut dans le récipient (1) est compris entre 3 et 12 minutes.

**3.** Utilisation suivant la revendication 1, caractérisée en ce que le temps de séjour est compris entre 2 et 7 minutes et en ce que la matière traitée est ensuite homogénéisée davantage dans une étape séparée.

**4.** Utilisation suivant l'une des revendications 1 à 3, caractérisée en ce que la teneur moyenne en humidité de la matière de rebut est limitée au préalable à 10 %.

**5.** Utilisation suivant la revendication 4, caractérisée en ce que la teneur en humidité est réglée par mélange de matières de rebut sèches et humides.

**6.** Utilisation suivant la revendication 4, caractérisée en ce que la teneur en humidité est réglée par adjonction de plâtre brut sec à la matière de rebut concassée au préalable de manière grossière.

**7.** Utilisation suivant la revendication 4, caractérisée en ce que la matière concassée au préalable de façon grossière est séchée au préalable.

**8.** Utilisation suivant l'une des revendications 1 à 7, caractérisée par une enveloppe de récipient chauffée.

**9.** Utilisation suivant l'une des revendications 1 à 8, caractérisée en ce qu'au récipient (1) est fourni de l'air de séchage.

**10.** Utilisation suivant l'une des revendications 1 à 6, caractérisée en ce que de l'eau est pulvérisée dans le récipient (1).

**11.** Utilisation suivant l'une des revendications 1 à 10, caractérisée en ce que la matière traitée est fournie ensuite à la calcination en étant mélangée à du plâtre brut dans un rapport inférieur à 20/80, de préférence de 10/90 à l'extrême.

**12.** Utilisation suivant l'une des revendications 1 à 11, caractérisée en ce que le concassage a lieu dans la zone du puits de remplissage (2).

FiG.1

FiG. 2

FiG. 3

FiG. 4